# EUROPEAN PATENT APPLICATION

(11) **EP 2 796 239 A1**
(43) Date of publication of application: **29.10.2014**
(21) Application number: 12859061.9
(22) Date of filing: 26.11.2012
(51) Int. Cl.: B23Q 11/08, B23B 15/00, B23B 25/04, B23Q 7/04, B23Q 41/02

(54) **MACHINING EQUIPMENT**

(30) Priority: 22.12.2011 JP 2011281062
(71) Applicant: Murata Machinery, Ltd., Kyoto-shi, Kyoto 601-8326 (JP)
(72) Inventor: KOZAWA, Haruaki, Inuyama-shi Aichi 484-8502 (JP)
(74) Representative: Beck, Alexander
(86) International application number: PCT/JP2012/080429
(87) International publication number: WO 2013/094367

(57) **Abstract**

A machine tool includes a machine bed (11), a processing machine (12, 13) mounted on the machine bed (11) for applying a mechanical processing to a workpiece (W), a covering unit (50) for enclosing a processing station by this processing machine (12), and a shroud support member (6) for supporting the covering unit (50) in non-contact relation with the machine bed (11). The machine tool also includes a loader (2A) capable of travelling along a rail (22), while holding the workpiece (W), and capable of selectively loading and unloading the workpiece (W) relative to the processing machine (12).

## Description

### CROSS REFERENCE TO THE RELATED APPLICATION

This application is based on and claims Convention priority to Japanese patent application No. 2011-281062, filed December 22, 2011, the entire disclosure of which is herein incorporated by reference as a part of this application.

### BACKGROUND OF THE INVENTION

### (Field of the Invention)

The present invention relates to a machine tool such as, for example, a lathe and, more particularly, to the structure of a covering used in such machine tool of a design effective to prevent the processing from being affected by vibrations from inside and outside of the machine.

### (Description of Related Art)

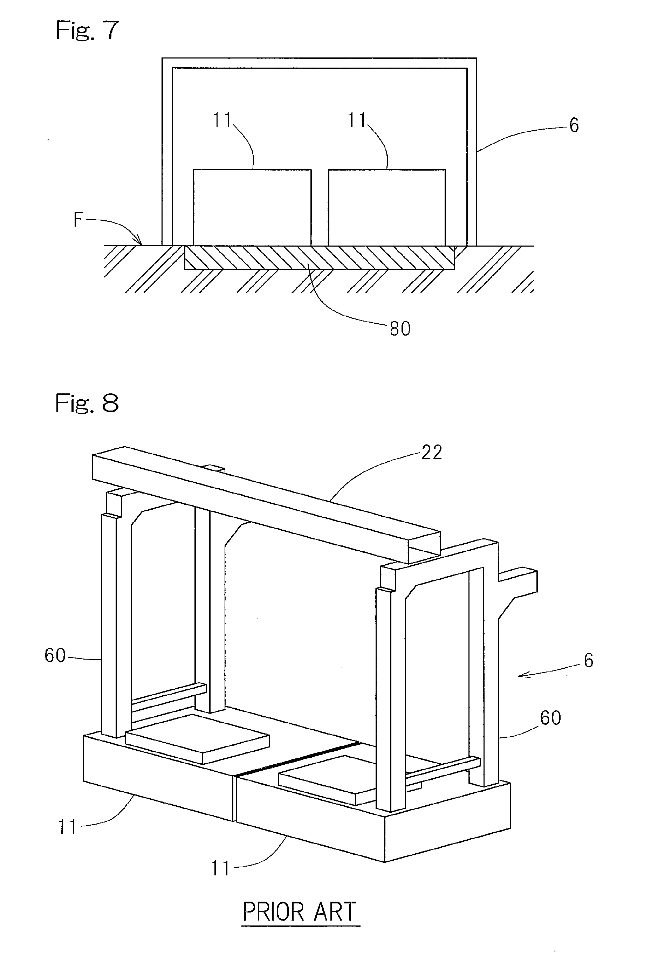

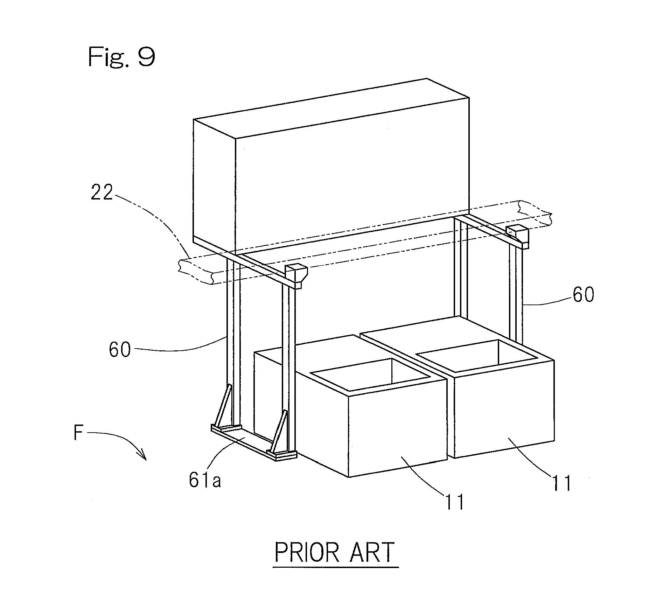

In the conventional machine tool, a shroud or covering support member 6 is, for example, fixed to a machine bed 11 as shown in Fig. 8 and a shroud or covering (not shown) is fitted to the shroud support member 6 to enclose a processing station. The shroud support member 6 includes left and right support stands 60 and 60. In addition, in the case of the machine tool having a loader for selectively loading and unloading a workpiece onto and from a processing equipment, it is quite often that as shown in Fig. 8 a travelling rail 22, along which the loader travels, is installed on the shroud support member 6. Regarding the travelling rail 22 for the loader, as shown in Fig. 9, the stands 60 and 60 for the support of the travelling rail are installed on a floor surface F in a fashion separated a distance from the bed 11 and the travelling rail 22 is occasionally supported by those stands 60 and 60.

### [Prior Art Literature]

- Patent Document 1:: Japanese Patent No. 2606511
- Patent Document 2:: Japanese Patent No. 3719167
- Patent Document 3:: Japanese Patent No. 4400011

If as shown in Fig. 8 the shroud or covering is fitted to the shroud support member 6 that is fixed to the bed 11, external vibrations may be occasionally transmitted to a processing equipment through the shroud, the shroud support member 6 and the bed 11, thus affecting the processing done by the processing equipment. In particular where the machine tool is a multiaxis machine equipped with a plurality of sets of processing equipments, even though the bed 11, on which each set of those processing equipments is installed, is separate from each other, vibrations produced during the processing performed by one set of the processing equipments may be transmitted to any other set or sets of the processing equipment or equipments through the bed 11 and the support member 6 for such set, and the shroud support member 6 and any other set or sets of the processing equipment or equipments, thus affecting the processing of each of the other set or sets of the equipment or equipments. Also, if the travelling rail 22 for the loader is installed on the shroud support member 6, vibrations resulting from the travel of the loader may be transmitted to the processing equipment or equipments and, hence, the processing performed by each of the processing equipments may be adversely affected.

Where as shown in Fig. 9 the travelling rail 22 for the loader is supported by the stands 60 that are installed spaced a distance from the bed 11, no vibration produced by the travel of the loader will be transmitted to the processing equipment. However, in order to install the stands 60 on the floor surface F in a stabilized fashion, an anchor plate 61a for each of the stands 60, which define a site at which the corresponding stand 60 is fixed to the floor surface F, need be increased in size and, therefore, there arises a problem that the space for installation of the machine tool as a whole tends to increase.

### SUMMARY OF THE INVENTION

In view of the foregoing, a primary object of the present invention is to provide a machining equipment to which vibrations from the inside and outside of the machine will barely be transmitted to the processing equipment.

In order to accomplish the foregoing object, the machine tool herein provided in accordance with the present invention includes a machine bed, a processing machine mounted on the machine bed and capable of applying a mechanical processing to a workpiece, a shroud to cover a processing station of the processing machine, and a shroud support member to support the shroud in a non-contact fashion with the machine bed. According to this construction, since the covering is supported by the covering support member that is in non-contact with the machine bed, vibrations originating from the outside of the machine will not be transmitted to the machine bed through the shroud and the shroud support member and, therefore, the processing performed by the processing machine will not be adversely affected. For this reason, the processing can be executed stably.

In a preferred embodiment of the present invention, where a loader selectively loads and unloads the workpiece relative to the processing machine, which loader is capable of traveling along a rail while holding the workpiece, the shroud support member concurrently may serve as a rail support member to support the rail. If the shroud support member concurrently serves as the rail support member, with no need to employ any extra rail support member, it is possible to prevent vibrations of the loader from being transmitted to the processing machine.

The shroud referred to above may include a box-like processing station covering unit to enclose the processing station and concurrently serve as a reinforcement for the shroud support member, and a plate shaped decorative covering unit to cover the machine bed and a support unit of the processing machine. In this case, the shroud can cover not only the processing station, but also a machine tool main body as a whole.

In a preferred embodiment of the present invention, where a plurality of the processing machines is provided, each of the processing machines is preferably installed on an independent machine bed. If the processing machines are installed on the respective machine beds that are independent from each other, vibrations brought about by the processing performed by one processing machine will not be transmitted to any other processing machine through the machine bed and, therefore, the processing performed by any other processing machine will not be adversely affected.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a perspective view showing the appearance of a machine tool designed in accordance with a preferred embodiment of the present invention;
Fig. 2 is a perspective view showing of the machine tool with a portion removed;
Fig. 3 is a perspective view showing a machine tool main body of the machine tool;
Fig. 4 is a perspective view showing a processing station covering unit used in the machine tool;
Fig. 5 is a perspective view showing a shroud support member used in the machine tool;
Fig. 6 is a perspective view showing the shroud support member and the processing station covering unit in the machine tool;
Fig. 7 is an explanatory diagram showing one example of a different machine bed installation;
Fig. 8 is a perspective view showing one example of the conventional shroud support members; and
Fig. 9 is a perspective view showing one example of the conventional rail support stand assembly.

### DESCRIPTION OF PREFERRED EMBODIMENTS

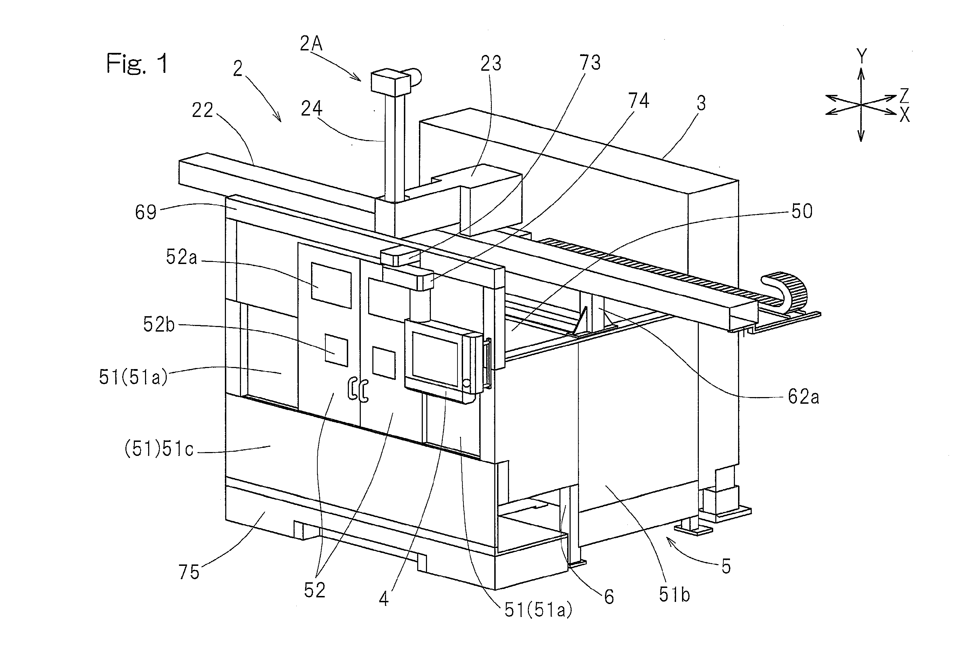

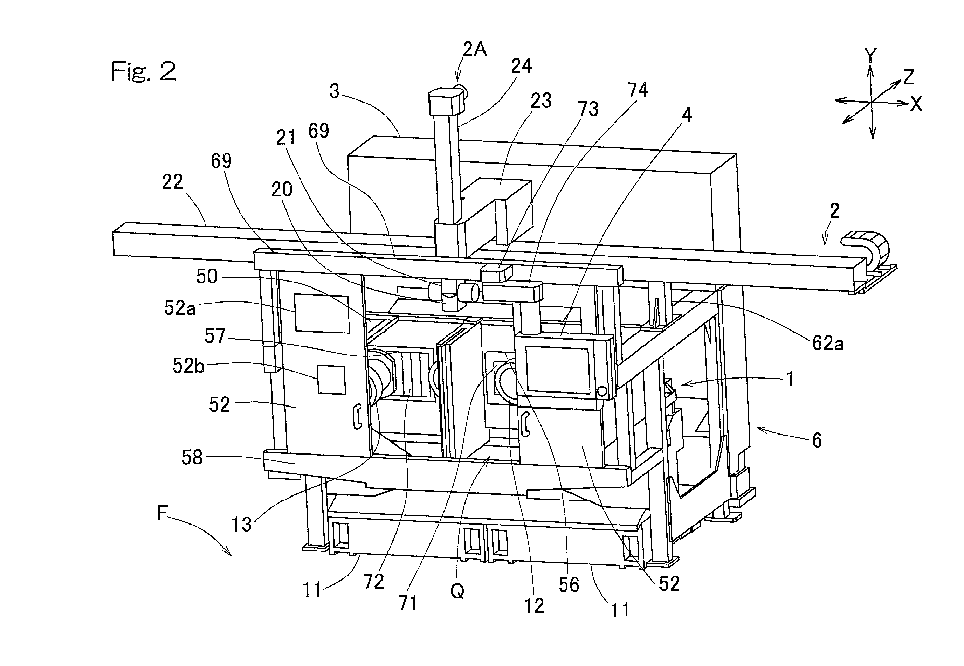

A preferred embodiment of the present invention will now be described in detail with reference to the accompanying drawings. In particular, Fig. 1 illustrates a perspective view showing the appearance of a machine tool and Fig. 2 is a view similar to Fig, 1, but with a portion of the machine tool shown removed. The machine tool shown in Figs. 1 and 2 includes a machine tool main body 1, a loader apparatus 2 for selectively loading and unloading a workpiece relative to the machine tool main body 1, a control console 3 for controlling the machine tool main body 1 and the loader apparatus 2, an operating board 4 for operating the machine tool main body 1 and the loader apparatus 2, a shroud (or covering assembly) 5 for enclosing the machine tool main body 1, and a shroud support member 6 for supporting the shroud 5. In the instance as shown in Fig. 1, the machine tool main body 1 is hidden by the shroud 5 and is therefore invisible. Fig. 2 illustrates a condition in which a portion of the shroud 5 (a decorative or dress-up covering 51) is removed.

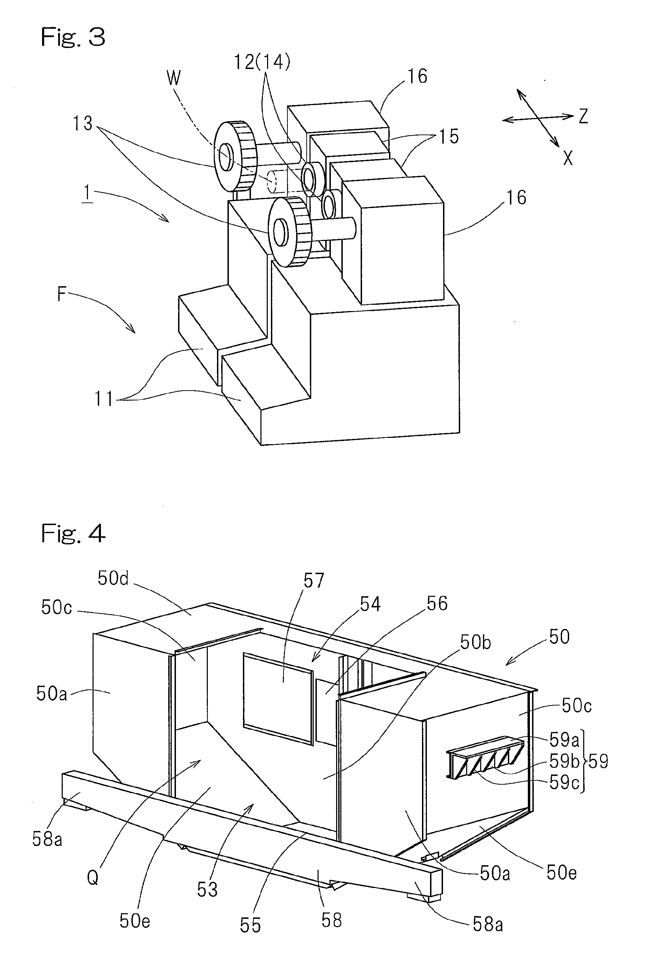

The machine tool main body 1 is best shown in Fig. 3. The machine tool main body 1 employed in the practice of this embodiment is a parallel double spindle lathe and includes left and right machine beds 11, installed on a floor surface F in a fashion independent from each other, and each of those machine beds 11 has a spindle 12 and a tool post 13, both forming respective parts of a processing machine, mounted atop the respective machine bed 11.

The spindle 12 is a shaft extending in an anteroposterior direction (a Z-axis direction) and has a chuck 14 mounted on a front ends thereof for holding a corresponding work piece. This spindle 12 is rotatably supported by a corresponding headstock 15 mounted on the associated bed 11 and is rotatively driven by a spindle motor (not shown) mounted on the corresponding headstock 15.

The tool post 13 is in the form of a polygonal shaped turret having a plurality of peripheral surfaces altogether forming an outer periphery of the turret. As is well known to those skilled in the art, a plurality of tools (not shown) are adapted to be fitted to the respective peripheral faces of the tool post 13 and some or all of the tools are, when the corresponding spindle 12 rotates, selectively indexed to a processing position one at a time. The tool post 13 is supported on a feed slide 16 mounted on the associated machine bed 11 for movement in the anteroposterior direction (Z-axis direction) and also in a lateral direction (X-axis direction).

The workpiece W then held by the chuck 14 on the respective spindle 12 is processed with the tool then brought into contact with such workpiece during the rotation of each of the spindles 12. With the feed slide 16 moved in the anteroposterior direction, the tool is fed in a direction axially of the corresponding spindle 12 and, with the feed slide 16 moved in the lateral direction, the depth of cut of the workpiece W by the tool is adjusted.

Referring to Figs. 1 and 2, the loader apparatus 2 loads the workpiece at a material supply station (not shown) and unloads the workpiece at a product delivery station (also not shown), which stations are defined on left and right sides of the machine tool main body 1, and also loads and unloads the workpiece relative to the spindles 12 of the machine tool main body 1. The loader apparatus 2 shown in this embodiment is of a gantry type and includes a loader 2A moving on a travelling rail 22, while holding the workpiece, which loader 2A moves in the lateral direction (X-axis direction) and also in a vertical direction (Y-axis direction) to transport the workpiece. More specifically, the travelling rail 22 is laid above the machine tool main body 1 so as to extend horizontally, and the loader 2A includes a travelling body 23, which is movable along the travelling rail 22, a vertically long elevating rod 24 movable up and down relative to the travelling body 23 and a loader head 21, provided at a lower end of the elevating rod 24, for holding the workpiece by means of a loader chuck 20.

The shroud 5 referred to previously includes a processing station covering unit 50 for enclosing a processing station Q, the decorative covering unit 51 and left and right slide doors 52 provided in a front surface portion of the processing station Q. The decorative covering unit 51 encloses the machine bed 11 of the machine tool main body 1, the headstock 15 which is a support unit for the spindle 12, and the feed slide 16 which is a support unit for the tool post 13. The processing station Q is a region where the workpiece is processed by the spindle 12 and the tool post 13, which form respective parts of the processing machine.

The processing station covering unit 50 is, as shown in Fig. 4, of a box-like configuration including a front plate segment 50a, a rear plate segment 50b, left and right side plate segments 50c, a top plate segment 50d and a bottom plate segment 50e. Left and right intermediate portions of each of the front plate segment 50a, the top plate segment 50d and the bottom plate segment 50e are cut out to define respective cutout openings. The cutout opening 53 defined in the front plate segment 50a has the slide doors 52 fitted thereto. The cutout opening 54 defined in the top plate segment 50d is an access opening for the loader head 21 of the loader 2A to make access to and out of the processing station Q. The cutout opening 55 defined in the bottom plate segment 50e is a discharge opening through which scrapes or chips produced as a result of the processing are discharged downwardly and is so shaped as to converge downwardly towards a low level area that occupies a center portion of the bottom plate segment 50e. Also, the rear plate segment 50b is provided with windows 56 and 57 through which the left and right spindles 12 and the left and right tool posts 13 can protrude therethrough into the processing station Q from rear.

A lower end portion of the front plate segment 50a is provided with a rail member 58 which defines a rail for the slide doors 52. This rail member 58 has its opposite end portions which protrude laterally outwardly beyond the left and right side plate segments 50c and terminate at respective lower to-be-supported portions 58a, which are supported by the shroud support member 6. Also, the left and right side plate segments 50c are provided with respective upper to-be-supported portions 59 each protruding laterally outwardly therefrom and supported by the adjacent shroud support member 6. The upper to-be-supported member 59 is of a generally inverted L-shaped configuration having a horizontal portion 59a and a vertical portion 59b, with a plurality of reinforcement ribs 59c provided between the horizontal and vertical portions 59a and 59b. A support structure for supporting the lower and upper to-be-supported portions 58a and 59 by means of the shroud support members 6 will be described in detail later.

Referring to Fig. 1, the decorative covering unit 51 referred to previously includes a plurality of plate shaped parts 51a, 51b and 51c, those plate shaped parts 51a to 51 c being fitted to respective portions of the shroud support member 6. The detail of each of those plate shaped parts 51a to 51 c will be described in detail later. The left and right slide doors 52 have respective viewing windows 52a and 52b defined in upper and vertically intermediate portions thereof and made of a transparent material, and are slidably supported by the processing station covering unit 50 and the shroud support member 6. The manner of supporting the slide doors 52 will also be described in detail later.

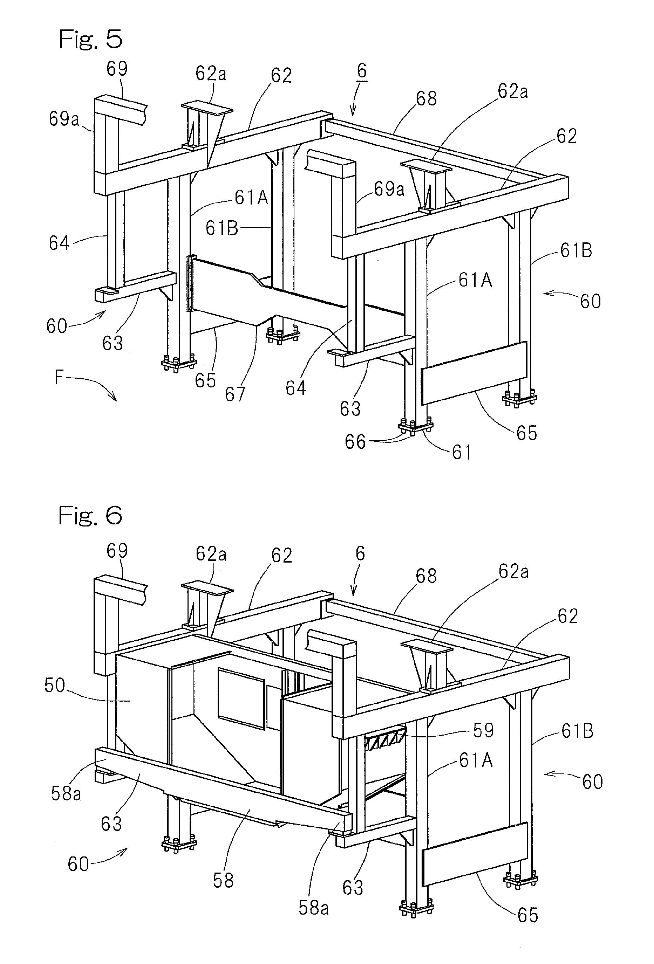

The shroud support member 6 is installed in a non-contact relation with any of the machine beds 11 of the machine tool main body 1. The shroud support member 6 includes, as shown in Fig. 5, left and right stands 60 that are erected on the floor surface F. Each of the left and right stands 60 includes front and rear support posts 61A and 61B, an upper frame 62 connected with upper ends of the front and rear support posts 61A and 61B so as to extend in the anteroposterior direction, a lower frame 63 protruding forwardly from an intermediate portion of the front support post 61A, a connecting frame 64 connecting the upper frame 62 and the lower frame 63 together, and a first rectangular connecting plate 65 of a substantial width connecting lower portions of the front and rear support posts 61A and 61B together with its width lying in the vertical direction. The left and right stands 60 are installed on the floor surface F when respective anchor plates 61, fixed to corresponding lower ends of the support posts 61A and 61B of each of the left and right stands 60, are fixed to the floor surface F by means of set bolts 66.

The respective front support posts 61A of the left and right stands 60 are connected together through a second connecting plate 67 of a substantial width and the respective upper frames 62 of the left and right stands 60 are connected together through a control console mounted frame 68 that extends in a lateral direction. Also, a rail mounting plate 62a for the support of the travelling rail 22 for the loader 2A is provided on the top frame 62 of each of the left and right stands 60. Yet, vertically extending left and right leg members 69a are fixed to respective front ends of the top frames 62 of the left and right stands 60, and a slide door guide frame 69 of a gate shape is provided.

The processing station covering unit 50 is supported by the shroud support member 6 as shown in Fig. 6. In other words, the lower to-be-supported portions 58a, which are left and right ends of the rail member 58, respectively, are placed on respective front end portions of the lower frames 63 of the shroud support member 6, and the lower to-be-supported portions 58a and the corresponding lower frames 63 are fixed by means of, for example, bolts. Also, with the upper to-be-supported member 59 held in contact with a lower surface of the upper frame 62, the upper to-be-supported member 59 and the upper frame 62 are fixed together by means of, for example, bolts or the like. By so doing, the left and right stands 60 of the shroud support member 6 are, in addition to the connection between the second connecting plate 67 and the control console mounting frame 68, connected with each other also by the processing station covering unit 50. The structure, in which the shroud support member 6 and the processing station covering unit 50 are integrated together, has a high rigidity. In other words, the processing station covering unit 50 concurrently serves as a reinforcement to reinforce the shroud support member 6.

As shown in Fig. 2, the machine tool main body 1 is of such an arrangement that the machine beds 11 are fixedly installed on the floor surface F with the headstocks 15 (Fig. 3) and the feed slides 16 (Fig. 3) positioned rearwardly of the processing station covering unit 50. Each of the machine beds 11 is separated from a structural body including the shroud support member 6 and the processing station covering unit 50. The spindles 12 and the tool posts 13 are exposed to the processing station Q through the adjacent windows 56 and 57. A shielding covering 71 is fixedly fitted to a gap delimited between the window 56, through which the spindles 12 are passed, and the spindles 12. Also, a bellows shaped covering 72, which can undergo a selective expansion or retraction in response to movement of the tool post 13 in a leftward or rightward direction, is fitted to a gap delimited by the window 57, through which the tool post 13 is passed, and the tool post 13.

As best shown in Figs. 1 and 2, the traveling rail 22 for the loader 2A is installed on the rail mounting plate 62a of the shroud support member 6. The control console 3 is mounted on the control console mounting frame 68 (Figs. 5 and 6) of the shroud support member 6. Also, the operating board 4 is fitted to a swing fulcrum member 73, provided on the slide door guide frame 69, through a swing arm 78 so that the operating board 4 can be swung about the vertical axis.

As shown in Fig. 1, a chip receiving unit 75 for receiving the scraps or chips falling downwardly through the opening 55 (Fig. 4) that is defined in the bottom plate segment 50e of the processing station covering unit 50 is provided below the processing station covering unit 50. This chip receiving unit 75 has the form of a vessel for receiving the chips or scrapes, or a conveyor installed separately from the machine tool so that the chips or scrapes can be transported to a chip recovery site.

The decorative covering unit 51 referred to previously consists of the plate shaped parts 51a, 51b and 51c fitted to various portions of the shroud support member 6. In other words, on a front side of the front plate segment 50a of the processing station covering unit 50, the front surface plate shaped part 51a is fitted to the connecting frame 64 and the slide door guide frame 69. The front surface plate shaped part 51a is not fitted to a front side portion of the opening 53 of the front plate segment 50a, which is left rendered to be open. The side surface plate shaped part 51b referred to above is fitted to an outer side surface of the left and right stands 60. Between the rear support posts 61b of the left and right stands 60, the rear surface plate shaped part (not shown) is fitted. Also, on a side upwardly of the chip receiving unit 75, the front surface lower plate shaped part 51c is fitted so as to cover the rail member 58 of the processing station covering unit 50.

The left and right slide doors 52 have their lower ends slidably supported by the rail member 58 of the processing station covering unit 50 for movement in a leftward and rightward direction and also have their upper ends fitted to the slide door guide frame 69 of the shroud support member 6 for movement in the leftward and rightward direction. With the slide doors 52 slid in the leftward and rightward direction, a front surface portion of the processing station Q can be selectively opened and closed.

According to the construction of the machine tool as hereinabove described, since the shroud 5 is supported by the shroud support member 6 which is not in contact with the machine beds 11 of the machine tool main body 1, vibrations from the outside of the machine will not be transmitted to the machine beds 11 through the shroud 5 and the shroud support member 6. Also, since the traveling rail 22 for the loader 2A is supported by the rail mounting plate 62a of the shroud support member 6, vibrations produced during the travelling of the loader 2A are not transmitted to the machine beds 11. In addition, although the machine tool main body 1 is a parallel double spindle lathe having two sets of processing machines, the machine beds 11, on which the respective processing machines are mounted, are independent from each other, and therefore, vibrations brought about by the processing of one of the processing machines are not transmitted directly to the other of the processing machines. Accordingly, the vibrations inside and outside of the machine will not adversely affect the processing performed by the spindles 12 and the tool posts 13, which form the respective parts of the processing machines and, therefore, the processing can be accomplished stably.

In the machine tool with the structure described above, since the shroud support member 6 concurrently serves as a support member for the travelling rail 22, there is no need to use any extra support member for the travelling rail 22 and, therefore, the structure can be simplified.

In addition, the shroud 5 of the machine tool makes use of, separate from the box-shaped processing station covering unit 50 enclosing the processing station Q and concurrently serving as a reinforcement for the shroud support member 6, the plate shaped decorative covering unit 51 for enclosing the machine beds 11 as well as the spindles 15 and the feed slide 16, which form support units of the processing machines. Accordingly, both of the processing station Q and the machine tool main body 1 as a whole can be covered.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. By way of example, while in describing the foregoing embodiment, the two machine beds 11 have been shown and described as installed directly on the floor surface F, such an alternative as shown in Fig. 7 is possible in which a base member 80 is provided on the floor surface F and the machine beds 11 may be installed on this base member 80. Even in this case, the shroud support member 6 is installed in non-contact relation with the machine beds 11.

In addition, the machine tool main body 1 may not be necessarily limited to the double spindle lathe such as shown and described, but may be a three or more spindle lathe. Also, it may be a machine other than the lathe.

Accordingly, such changes and modifications are, unless they depart from the scope of the present invention as delivered from the claims annexed hereto, to be construed as included therein.

### [Reference Numerals]

- 1: Machine tool main body
- 2: Loader apparatus
- 2A: Loader
- 5: Shroud
- 6: Shroud support member
- 11: Machine bed
- 12: Spindle (Processing machine)
- 13: Tool post (Processing machine)
- 15: Headstock (Support unit of the processing machine)
- 16: Feed slide (Support unit of the processing machine)
- 22: Travelling rail
- 50: Processing station covering unit
- 51: Decorative covering unit
- Q: Processing station

## Claims

1. A machine tool which comprises:
a machine bed;
a processing machine capable of applying a mechanical processing to a workpiece mounted on the machine bed;
a shroud to cover a processing station of the processing machine; and
a shroud support member to support the shroud in non-contact relation with the machine bed.

2. The machine tool as claimed in claim 1, further comprising a loader to selectively load and unload the workpiece relative to the processing machine, the loader being capable of traveling along a rail while holding the workpiece,
wherein the shroud support member concurrently serves as a rail support member to support the rail.

3. The machine tool as claimed in claim 1 or 2, wherein the shroud comprises:
a box-like processing station covering unit to enclose the processing station and concurrently serve as a reinforcement for the shroud support member; and
a plate shaped decorative covering unit to cover the machine bed and a support unit of the processing machine.

4. The machine tool as claimed in any one of claims 1 to 3, wherein the processing machine is provided in a plural number, each of those processing machines being installed on an independent machine bed.
